# EUROPEAN PATENT SPECIFICATION

(11) **EP 4 087 411 B1**
(45) Date of publication and mention of the grant of the patent: **09.08.2023**
(21) Application number: 21700509.9
(22) Date of filing: 08.01.2021
(51) Int. Cl.: A23G 9/44, A23G 9/48, A23G 9/50

(54) **NOVEL FROZEN CONFECTION ARCHITECTURE AND PROCESS OF PREPARATION**
NEUARTIGE ARCHITEKTUR VON GEFRORENEM KONFEKT UND VERFAHREN ZUR HERSTELLUNG
NOUVELLE ARCHITECTURE DE CONFISERIE CONGELÉE ET PROCÉDÉ DE PRÉPARATION

(30) Priority: 10.01.2020 EP 20151220
(43) Date of publication of application: 16.11.2022
(73) Proprietor: Unilever IP Holdings B.V., 3013 AL Rotterdam (NL)
(72) Inventor: ABBOUSHI, Husni, Jalal, London N3 1EU (GB); LACY, Ian, David, Sharnbrook Bedford Bedfordshire MK44 1LQ (GB)
(74) Representative: Turner, Felicity Margaret Mary
(86) International application number: PCT/EP2021/050251
(87) International publication number: WO 2021/140188

(56) References cited:
- EP-A1- 0 223 884
- EP-A1- 1 597 974
- EP-B1- 0 044 689
- EP-B1- 1 673 981
- WO-A1-2013/007493
- DE-C1- 3 436 578
- US-A- 4 828 854
- US-A- 4 942 910
- US-A- 5 000 969
- US-A- 5 603 965
- US-B2- 7 658 960

## Description

### Field of the invention

The present invention relates to a structurally stable frozen confection product comprising from two to eight longitudinally rippled frozen confection streams and a process for its preparation.

### Background of the invention

Frozen confection products, in particular frozen confection stick products, must be sufficiently structurally stable in order to retain their shape during consumption. Structural stability (mechanical strength) is typically imparted by both the architecture (structure and shape) of the frozen confection product and the composition of the frozen confection.

Typically, frozen confection products that comprise a significant proportion of a regularly shaped homogenous frozen confection, i.e. an ovoid (rounded rectangular) shaped water ice prepared from one water ice composition, appear to have greater structural stability than, for example, frozen confections that comprise multiple frozen confection compositions that are present in an irregular shape, for example, the TWISTER^{©} product shape comprised of multiple streams of frozen confection.

Frozen confection products may be prepared by moulding, for example, a mould is filled with liquid or semi-solid frozen confection composition, frozen to form a solidified frozen confection product, demoulded and typically hardened. In order to prepare frozen confection products on an industrial scale moulding is typically limited to shapes that can be demoulded easily, i.e.: shapes that comprise smooth surfaces.

Frozen confection products may also be prepared by extrusion. Extrusion enables the preparation of frozen confection products of different architecture, for example, frozen confection products spirally formed projections and recessed relief features on their outer surface.

GB 1,169,500, GB 1,076,117 and EP 0 044 689 B1 disclose frozen confection products prepared by extrusion. EP 0 044 689 B1 discloses frozen confection products comprising spirally formed projections and recessed relief features on their outer surface. The frozen confection products disclosed in EP 0 044 689 B1 may be prepared by extrusion of independent streams of frozen confection.

Typically, all streams of frozen confection extruded to form frozen confection products have a common longitudinal rotational axis, typically coinciding with the longitudinal rotational axis of the frozen confection product. The coincidence of the longitudinal rotational axes of the streams of frozen confection and frozen confection product is considered to impart structural stability to the frozen confection product.

EP 0 044 689 B1 discloses frozen confection products that comprise coincidental longitudinal rotational axes of both the streams of frozen confection and the frozen confection products prepared by extrusion of frozen confection streams through a rotating nozzle. Extrusion of the frozen confection through a rotating nozzle results in a frozen confection product architecture wherein the frozen confection streams are entwined upon extrusion.

The present invention provides structurally stable frozen confection products comprising novel architectures. The novel frozen confection products comprise multiple frozen confection streams wherein the longitudinal rotational axes of the frozen confection streams are spaced apart from each other. Furthermore, the novel frozen confection products comprise multiple frozen confection streams wherein one or more of the frozen confection streams may be aerated. Furthermore, the novel frozen confection product is a layered frozen confection product that has the appearance of a product comprising spirally formed projections and recessed relief features.

### Summary of the invention

The present invention relates to a structurally stable frozen confection product comprising from two to eight frozen confection streams rippled in the longitudinal direction, wherein the frozen confection stream ripples form a longitudinal repeat unit comprising a ripple of each frozen confection stream and the frozen confection product comprises from three to eight repeat units and the longitudinal rotational axes of the frozen confection stream ripples are spaced apart from each other, i.e.: the frozen confection stream ripples are not coaxial.

### Detailed description of the invention

A frozen confection product comprising from two to eight frozen confection streams rippled in the longitudinal direction, wherein the frozen confection stream ripples form a longitudinal repeat unit comprising a ripple of each frozen confection stream, the frozen confection product comprises from three to eight repeat units, and the longitudinal rotational axes of the frozen confection stream ripples are spaced apart from each other.

Frozen confection product means a product comprising multiple rippled streams of frozen confection, wherein each rippled stream of frozen confection is adjacent to and in contact with one or more additional rippled streams of frozen confection. The frozen confection product is therefore a composite product comprised of multiple rippled streams of frozen confection.

Frozen confection stream means an extrudate of homogenous frozen confection continuously extruded from an outlet of a nozzle. Each frozen confection stream is extruded independently from a given nozzle outlet and may be slightly coalesced during extrusion of the frozen confection stream from the outlet of the nozzle, as described in EP 0 044 689 B1.

Rippled stream of frozen confection means a frozen confection extrudate shape that is non-linear in the longitudinal direction of the frozen confection product. Non-linear frozen confection extrudate shapes comprise projections and recesses. For example, a spiral formed extrudate is projected in the longitudinal direction and comprises the shape of the extrudate such as a cylindrical tube of frozen confection arranged in a spiral shape, the spiral shape of the extrudate results in corresponding recesses adjacent to the spiral shape where there is no frozen confection extrudate present. The term spiral is interchangeable with the term helical. The ripple stream may be a frozen confection extrudate in the extrudate shape of an irregularly shaped spiral.

Shapes such as or similar to a spiral formed projection comprise repeat units. A repeat unit is the shape of the frozen confection stream present between two identical locations of the lateral cross section of the frozen confection product that are spaced apart in the longitudinal direction. Repeat units are located adjacent to each other in the longitudinal direction of the frozen confection product.

The frozen confection product comprises rippled streams of frozen confection that are similar in shape, wherein the rippled streams of frozen confection have the same or similar repeat units. As the longitudinal rotational axes of the rippled streams of frozen confection are spaced apart from each other, the rippled streams of frozen confection are in contact with and adjacent to each other.

The repeat units of adjacent rippled streams of frozen confection are spaced in the longitudinal direction of the frozen confection product and offset against each other to form a repeat unit comprising each repeat unit of the rippled streams of frozen confection of the frozen confection product. The rippled streams are arranged in order for the projection of the ripples of the streams of frozen confections to be positioned within the recesses of the projection of the adjacent streams.

Longitudinal repeat unit means the repeat units of each rippled stream of frozen confection that are interspersed so that adjacent rippled streams of frozen confection are regularly interspersed with each other in the longitudinal direction of the frozen confection product. Such positioning of the ripples of each stream result in the formation of layers of frozen confection ripples in the longitudinal direction of the frozen confection product. The formation of such layers results in a frozen confection composite product comprising an inner body of layers of multiple frozen confections and an outer surface shape comprising projections and recesses, i.e.: a frozen confection product comprising a complex architecture.

The repeat units of the rippled streams of frozen confection are spaced apart in the longitudinal direction of the frozen confection product forming alternating layers of frozen confection when viewed from one face of the frozen confection product.

Longitudinal direction means the direction of the longest length of the frozen confection product. The longitudinal direction is typically the direction of the longitudinal axis of a rippled stream of frozen confection. Rotational longitudinal axis of a rippled stream of frozen confection means the longitudinal axis positioned at the central point of the lateral cross section of the rippled stream of frozen confection. The longitudinal axis and rotational longitudinal axis of a rippled stream of frozen confection are interchangeable terms.

Spaced apart longitudinal rotational axes of rippled streams of frozen confection means longitudinal rotational axes of rippled streams of frozen confection that are parallel but not coincidental. Preferably the longitudinal rotational axes of rippled streams of frozen confection are spaced equidistant from adjacent rippled streams of frozen confection. 'Spaced equidistant from adjacent rippled streams of frozen confection' means that the longitudinal axis of each rippled streams of frozen confection are not coaxial and are spaced equidistant from the axis of adjacent rippled streams of frozen confection. Coaxial means two or more axes having the same position. Axes that are not coaxial means that the axes are parallel but not in an identical location in relation to each other.

More preferably, the longitudinal rotational axes of all rippled streams of frozen confection are spaced equidistant from all other rippled streams of frozen confection.

In an aspect of the invention the frozen confection product comprises from 20 % to 80 % of the surface area of each rippled frozen confection stream is in contact with any adjacent rippled frozen confection stream present. Preferably, the frozen confection product comprises from 25 % to 75 % of the surface area of each rippled frozen confection stream is in contact with adjacent rippled frozen confection stream present. More preferably, the frozen confection product comprises from 30 % to 70 % of the surface area of each rippled frozen confection stream is in contact with adjacent rippled frozen confection streams present.

In an aspect of the invention each rippled frozen confection stream is in contact with from one to seven adjacent rippled frozen confection streams. Preferably, each rippled frozen confection stream is in contact with from two to six adjacent rippled frozen confection streams. More preferably, each rippled frozen confection stream is in contact with from two to five adjacent rippled frozen confection streams. Even more preferably each rippled frozen confection stream is in contact with two adjacent rippled frozen confection streams.

In an aspect of the invention the longitudinal rotational axis of each rippled frozen confection stream does not coincide with the longitudinal rotational axis of the frozen confection product.

In an embodiment of the invention the ratio of the longitudinal length of the repeat unit to the diameter of the frozen confection stream is from 1.0 : 1.0 to 3.0 : 1.0. Preferably, the ratio of the longitudinal length of the repeat unit to the diameter of the frozen confection stream is from 1.5 : 1.0 to 3.0 : 1.0. Preferably, the ratio of the longitudinal length of the repeat unit to the diameter of the frozen confection stream is from 1.5 : 1.0 to 2.8 : 1.0.

In an aspect of the invention the frozen confection product comprises from two to eight frozen confection streams. Preferably, the frozen confection product comprises from three to six frozen confection streams. More preferably the frozen confection product comprises from three to four frozen confection streams. Even more preferably the frozen confection product comprises three frozen confection streams.

The frozen confection streams may be selected from the same or different frozen confections, i.e.: the frozen confection product may comprise one or more frozen confection compositions. The term 'frozen confection' is intended to be equivalent to the term 'frozen confection composition'. Frozen confection means a sweet-tasting fabricated foodstuff intended for consumption in the frozen state (i.e. under conditions wherein the temperature of the foodstuff is less than 0° C). The frozen confection is selected from the group consisting of water ice, milk-ice, ice cream, frozen yoghurt, frozen custard, sorbet, gelato and mixtures thereof. Ice cream may be selected from the group consisting of dairy ice cream, non-dairy ice cream and mixtures thereof. Preferably, the frozen confection is selected from the group consisting of ice cream and water ice.

In an embodiment of the invention the frozen confection product comprises two water ice frozen confection streams and one ice cream frozen confection stream.

In an alternative embodiment of the invention the frozen confection product comprises one water ice frozen confection stream and two ice cream frozen confection streams.

In a further alternative embodiment of the invention the frozen confection product comprises three water ice frozen confection stream streams.

Frozen confections may be prepared, for example, according to methods provided in the 'The Science of Ice Cream', C. Clarke, RSC 2004, for example: chapters 3, 4 and 8; and 'Ice Cream' 5th Ed., Marshall and Arbuckle, 1996, Chapman & Hall, New York. N.Y., in particular chapters 11, 12 and 22.

The frozen confection product may comprise one or more frozen confection compositions and may further comprise any additional ingredient. For example, the frozen confection product may comprise one or more frozen confection sauce compositions, one or more frozen confection coating compositions, one or more inclusions, for example, fruit pieces, chocolate pieces, confectionary, nuts and bakery goods (wafer, biscuit and cake pieces). Exemplary frozen confection sauces, coatings and inclusions, are described in 'The Science of Ice Cream', C. Clarke, RSC 2004, page 54-59.

Frozen confections may be aerated. Aerated means that the frozen confection composition comprises air. The term "aerated" means that gas has been intentionally incorporated into the composition, for example by mechanical means. The gas can be any gas, but is preferably, particularly in the context of food products, a food-grade gas such as air, nitrogen, nitrous oxide, or carbon dioxide. The extent of aeration is defined in terms of "overrun". The amount of air present is defined as overrun and is defined and calculated as disclosed in: 'The Science of Ice Cream', C. Clarke, RSC 2004, chapter 4. The amount of overrun present in the product will vary depending on the desired product characteristics. The overrun is from 0 % to 200%; preferably from 0% to 100%; more preferably from 0% to 50%.

A typical process for preparation of frozen aerated products according to the present invention is described in "The Science of Ice Cream", C. Clarke, R. Soc. Chem., Cambridge, United Kingdom, 2004 pages 60-83.

The invention also relates to a process for the preparation of a frozen confection product comprising from two to eight frozen confection streams rippled in the longitudinal direction, wherein the frozen confection stream ripples form a longitudinal repeat unit comprising a ripple of each frozen confection stream and the frozen confection product comprises from three to eight repeat units and the longitudinal rotational axes of the ripples are spaced apart from each other.

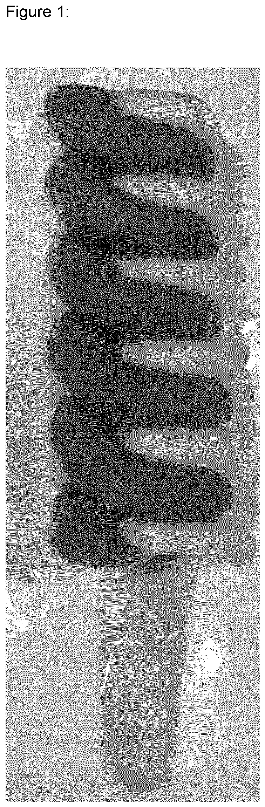

Exemplary apparatus is described in EP 0 044 689 B1; in particular the nozzle of figure 1. The process of the present invention corresponds in part to the process described in EP 0 044 689 B1; however, the nozzle is stationary and not rotated.

The process of the invention comprises the steps of:
a. Passing a continuous flow of from two to eight frozen confections through a stationary nozzle comprising two to eight passageways and corresponding nozzle inlets and outlets;
b. Extruding the frozen confections onto a moving conveyor belt to form rippled streams of frozen confection; and,
c. Cutting the extrudate of step b. positioned on the conveyor to form a frozen confection product.

The frozen confection product of step c. may be cooled. The cooled frozen confection product of step c. may be hardened.

The frozen confection product of step c. may be hardened.

The term 'conveyor' is intended to be synonymous with the term 'conveyor belt'.

In aspect of the invention the extrudate and conveyor are moving in the same direction. Preferably, the direction is horizontal. Although, once extruded, the frozen confection stream travels in a horizontal and downward direction in order to reach the conveyor belt, the statement 'the invention the extrudate and conveyor are moving in the same direction' is intended to mean the direction of the extrudate immediately as it exits the outlet of the nozzle, i.e.: horizontal.

Each frozen confection is passed through a respective passageway. For example, a frozen confection product comprising three rippled frozen confection streams is prepared by passing each frozen confection through one passageway of a stationary nozzle comprising three passageways and corresponding outlets.

In an embodiment of the invention, step c. may be followed by inserting a stick into one end of the frozen confection product of c. to form a frozen confection stick product. In an embodiment of the invention each frozen confection stream is extruded independently from a given nozzle outlet and may be slightly coalesced during extrusion of the frozen confection stream through the outlet of the nozzle, as described in EP 0 044 689 B1. In an embodiment of the process of the invention the stationary nozzle present in step a. of the process of the invention has slightly convergent passageways that meet a little before the outlet ends of the passageways.

In an alternative embodiment of the invention, the nozzle outlets are independent from each other. In a preferred embodiment of the invention the nozzle outlets are independent from each other and the central point of the outlets are spaced equidistant from each other. The outlets may be disposed in an equilateral triangular configuration.

In an embodiment of the invention the nozzle outlets have the same diameter. In an alternative embodiment of the invention the nozzle outlets have different diameters.

EP 0 044 689 B1 describes exemplary use of apparatus for the preparation of the frozen confection products of the invention. For example, EP 0 044 689 B1 describes extrusion rates and temperatures suitable for extrusion of frozen confection according to step b. and conveyor take off speeds.

In an embodiment of the invention conveyor take off speeds are from 0.5 metres per minute to 15 metres per minute; preferably from 1.0 metres per minute to 10 metres per minute; more preferably from 1.5 metres per minute to 5 metres per minute.

Corresponding to EP 0 044 689 B1, the distance of the nozzle from the conveyor is from the nozzle almost touching the conveyor to 6 nozzle diameters above the conveyor; preferably from the nozzle almost touching the conveyor to 5 nozzle diameters above the conveyor; preferably from the nozzle almost touching the conveyor to 4 nozzle diameters above the conveyor.

In an embodiment of the invention the extrusion rates of the frozen confection streams are equal.

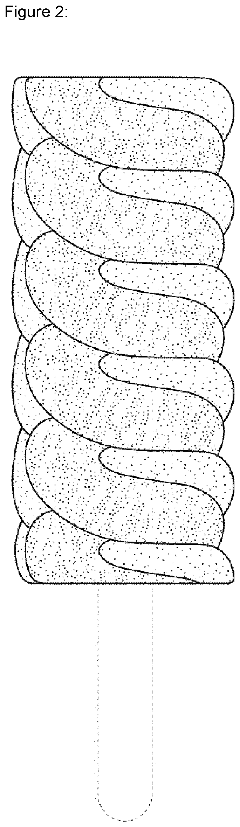

Figures 1 and 2 illustrate a frozen confection product of the invention comprising three frozen confection streams rippled in the longitudinal direction of the frozen confection product. Figures 1 and 2 illustrate that the frozen confection stream ripples form longitudinal repeat units comprising a ripple of each frozen confection stream. Figures 1 and 2 illustrate a frozen confection product comprising three ripples, corresponding to the three frozen confection streams, and between five and six repeat units. Furthermore, Figures 1 and 2 illustrate that the longitudinal rotational axes of the ripples of the frozen confection product are spaced apart from each other.

## Claims

1. A frozen confection stick product comprising from two to eight frozen confection streams rippled in the longitudinal direction, wherein the frozen confection stream ripples form a longitudinal repeat unit comprising a ripple of each frozen confection stream, the frozen confection product comprises from three to eight repeat units, and the longitudinal axes of the frozen confection stream ripples are not coaxial.

2. A frozen confection product according to claim 1, wherein from 20 % to 80 % of the surface area of each rippled frozen confection stream is in contact with at least two alternative frozen confection streams.

3. A frozen confection product according to claim 1 or 2, wherein the longitudinal rotational axis of each rippled frozen confection stream does not coincide with the longitudinal axis of the frozen confection product.

4. A frozen confection product according to claim 1 to 3, wherein the ratio of the longitudinal length of the repeat unit to the diameter of the frozen confection stream is from 1.0 : 1.0 to 3.0 : 1.0.

5. A frozen confection product according to claims 1 to 4, wherein the frozen confection of the frozen confection streams is selected from ice cream and water ice.

6. A frozen confection product according to claims 1 to 5, wherein the frozen confection product comprises three frozen confection streams.

7. A frozen confection product according to claim 6, wherein the frozen confection product comprises two water ice frozen confection streams and one ice cream frozen confection stream.

8. A process for the preparation of a frozen confection product according to claims 1 to 7 comprising the steps of:
a. Passing a continuous flow of from two to eight frozen confections through a stationary nozzle comprising two to eight passageways and corresponding nozzle inlets and outlets;
b. Extruding the frozen confections onto a moving conveyor belt to form rippled streams of frozen confection; and,
c. Cutting the extrudate of step b. positioned on the conveyor to form a frozen confection product.
d. Inserting a stick into the frozen confection product of step c.

9. A process for the preparation of a frozen confection product according to claim 8, wherein the frozen confection product of step c. is cooled.

10. A process for the preparation of a frozen confection product according to claims 8 or 9, wherein a stick is inserted into one end of the frozen confection product of c.

11. A process for the preparation of a frozen confection product according to claims 8 to 10, wherein the outlets of the nozzle have the same diameter.

12. A process for the preparation of a frozen confection product according to claims 8 to 11, wherein the outlets of the nozzles are disposed in an equilateral triangular configuration.

## Patentansprüche

1. Produkt aus gefrorenem Konfekt am Stiel, das zwei bis acht Ströme aus gefrorenem Konfekt umfasst, die in Längsrichtung gewellt sind, wobei die Wellen der Ströme aus gefrorenem Konfekt eine sich in Längsrichtung wiederholende Einheit bilden, die eine Welle aus jedem Strom aus gefrorenem Konfekt umfasst, wobei das Produkt aus gefrorenem Konfekt drei bis acht sich wiederholende Einheiten umfasst und wobei die Längsachsen der Wellen der Ströme aus gefrorenem Konfekt nicht koaxial sind.

2. Produkt aus gefrorenem Konfekt nach Anspruch 1, wobei ein Anteil von 20 % bis 80 % der Oberfläche jedes gewellten Stroms aus gefrorenem Konfekt mit wenigstens zwei alternativen Strömen aus gefrorenem Konfekt in Kontakt ist.

3. Produkt aus gefrorenem Konfekt nach Anspruch 1 oder 2, wobei die Drehachse in Längsrichtung jedes gewellten Stroms aus gefrorenem Konfekt nicht mit der Längsachse des Produkts aus gefrorenem Konfekt zusammenfällt.

4. Produkt aus gefrorenem Konfekt nach Anspruch 1 bis 3, wobei das Verhältnis der Länge in Längsrichtung der sich wiederholenden Einheit zum Durchmesser des Stroms aus gefrorenem Konfekt im Bereich von 1,0 : 1,0 bis 3,0 : 1,0 liegt.

5. Produkt aus gefrorenem Konfekt nach Anspruch 1 bis 4, wobei das gefrorene Konfekt der Ströme aus gefrorenem Konfekt aus Eiscreme und Wassereis gewählt ist.

6. Produkt aus gefrorenem Konfekt nach Anspruch 1 bis 5, wobei das Produkt aus gefrorenem Konfekt drei Ströme aus gefrorenem Konfekt umfasst.

7. Produkt aus gefrorenem Konfekt nach Anspruch 6, wobei das Produkt aus gefrorenem Konfekt zwei Ströme aus gefrorenem Konfekt aus Wassereis und einen Strom aus gefrorenem Konfekt aus Eiscreme umfasst.

8. Verfahren für die Herstellung eines Produkts aus gefrorenem Konfekt nach den Ansprüchen 1 bis 7, das die folgenden Schritte umfasst:
a. Führen eines kontinuierlichen Stroms von zwei bis acht gefrorenen Konfektmassen durch eine feststehende Düse, die zwei bis acht Durchgänge und entsprechende Düseneinlässe und -auslässe umfasst,
b. Extrudieren der gefrorenen Konfektmassen auf ein bewegliches Transportband, um gewellte Ströme aus gefrorenem Konfekt zu bilden; und
c. Schneiden des Extrudats von Schritt b, das auf dem Transportband positioniert ist, um ein Produkt aus gefrorenem Konfekt zu bilden;
d. Einsetzen eines Stiels in das Produkt aus gefrorenem Konfekt von Schritt c.

9. Verfahren für die Herstellung eines Produkts aus gefrorenem Konfekt nach Anspruch 8, wobei das Produkt aus gefrorenem Konfekt von Schritt c gekühlt wird.

10. Verfahren für die Herstellung eines Produkts aus gefrorenem Konfekt nach Anspruch 8 oder 9, wobei in ein Ende des Produkts aus gefrorenem Konfekt von c ein Stiel eingesetzt wird.

11. Verfahren für die Herstellung eines Produkts aus gefrorenem Konfekt nach den Ansprüchen 8 bis 10, wobei die Auslässe der Düse den gleichen Durchmesser haben.

12. Verfahren für die Herstellung eines Produkts aus gefrorenem Konfekt nach den Ansprüchen 8 bis 11, wobei die Auslässe der Düsen in einer Konfiguration eines gleichseitigen Dreiecks angeordnet sind.

## Revendications

1. Produit de stick de confiserie congelée comprenant de deux à huit courants de confiserie congelée ridés dans la direction longitudinale, dans lequel les rides de courants de confiserie congelée forment une unité de répétition longitudinale comprenant une ride de chaque courant de confiserie congelée, le produit de confiserie congelée comprend de trois à huit unités de répétition, et les axes longitudinaux des rides de courant de confiserie congelée ne sont pas coaxiaux.

2. Produit de confiserie congelée selon la revendication 1, dans lequel de 20 % à 80 % de la surface de chaque courant de confiserie congelée ridé est en contact avec au moins deux autres courants de confiserie congelée.

3. Produit de confiserie congelée selon la revendication 1 ou 2, dans lequel l'axe de rotation longitudinal de chaque courant de confiserie congelée ridée ne coïncide pas avec l'axe longitudinal du produit de confiserie congelée.

4. Produit de confiserie congelée selon la revendication 1 à 3, dans lequel le rapport de la longueur longitudinale de l'unité de répétition au diamètre du courant de confiserie congelée est de 1,0 : 1,0 à 3,0 : 1,0.

5. Produit de confiserie congelée selon les revendications 1 à 4, dans lequel la confiserie congelée des courants de confiserie congelée est choisie parmi une crème glacée et une glace à l'eau.

6. Produit de confiserie congelée selon les revendications 1 à 5, dans lequel le produit de confiserie congelée comprend trois courants de confiserie congelée.

7. Produit de confiserie congelée selon la revendication 6, dans lequel le produit de confiserie congelée comprend deux courants de confiserie congelée de glace à l'eau et un courant de confiserie congelée de crème glacée.

8. Procédé pour la préparation d'un produit de confiserie congelée selon les revendications 1 à 7 comprenant les étapes de :
a. passage d'un écoulement continu de deux à huit confiseries congelées à travers une buse stationnaire comprenant de deux à huit voies de passage et correspondant à des entrées et sorties de buse ;
b. extrusion des confiseries congelées sur une bande convoyeuse en déplacement pour former des courants ridés de confiserie congelée ; et,
c. coupe de l'extrudé de l'étape b. positionné sur le convoyeur pour former un produit de confiserie congelée ;
d. insertion d'un stick dans le produit de confiserie congelée de l'étape c.

9. Procédé pour la préparation d'un produit de confiserie congelée selon la revendication 8, dans lequel le produit de confiserie congelée de l'étape c. est refroidi.

10. Procédé pour la préparation d'un produit de confiserie congelée selon les revendications 8 ou 9, dans lequel un stick est inséré dans une extrémité du produit de confiserie congelée de c.

11. Procédé pour la préparation d'un produit de confiserie congelée selon les revendications 8 à 10, dans lequel les sorties de la buse ont le même diamètre.

12. Procédé pour la préparation d'un produit de confiserie congelée selon les revendications 8 à 11, dans lequel les sorties de la buse sont disposées dans une configuration triangulaire équilatérale.
